# EUROPÄISCHE PATENTANMELDUNG

(11) **EP 1 705 270 A2**
(43) Veröffentlichungstag der Anmeldung: **27.09.2006**
(21) Anmeldenummer: 06005373.3
(22) Anmeldetag: 16.03.2006
(51) Int. Cl.: D01H 5/64, B65G 39/06

(54) **Aufsteckhülse**

(30) Priorität: 21.03.2005 DE 202005004733 U
(71) Anmelder: Kohut, Franz-Josef, 91550 Dinkelsbühl (DE)
(72) Erfinder: Kohut, Franz-Josef, 91550 Dinkelsbühl (DE)
(74) Vertreter: Blaumeier, Jörg

(57) **Zusammenfassung**

Aufsteckhülse (1), umfassend einen rohrförmigen, mit einem Belag (3) oder einer Beschichtung versehenen Hülsenkörper (2), dadurch gekennzeichnet, dass sie auf eine als Aufnahmekem dienende Rolle oder Walze aufsteckbar oder aufgesteckt ist.

## Beschreibung

Die Erfindung betrifft eine Aufsteckhülse, umfassend einen rohrförmigen, mit einem Belag versehenen Hülsenkörper.

Daneben betrifft die Erfindung ein Schnellwechselsystem mit einer solchen Aufsteckhülse sowie ein Verfahren zum Instandsetzen einer Rolle oder Walze.

Aus den Gebrauchsmustern DE 202 03 754 U1 und DE 20 2004 009 770 U1 sind Walzen bekannt, die in unterschiedlichen Maschinen eingesetzt werden können. Diese Walzen bestehen im Wesentlichen aus einem Trägerrohr, das mit einem Überzug oder Besatz versehen ist. Dieser Besatz, der beispielsweise ein Webplüsch sein kann, ist in Form von Streifen spiralförmig auf das Trägerrohr gewickelt und mit dessen Oberfläche verbunden. Beide Endseiten dieser Walze sind mit Endkappen versehen, durch die eine Welle geschoben ist, sodass die Wellenenden seitlich als Zapfen hervorstehen.

Derart aufgebaute Rollen und Walzen werden in unterschiedlichen Maschinen eingesetzt, beispielsweise als Reinigungswalzen, Kämmwalzen, Tragrollen, Transportrollen, Umlenkrollen oder Andrückrollen, daneben auch als Farbwalzen. Im Laufe der Zeit kann sich die Beschichtung oder der Belag der Walze abnutzen oder verschmutzen. Daneben kann die Rollenfläche einlaufen, sodass die Rolle oder Walze instand gesetzt werden muss. Allerdings ist die Instandsetzung herkömmlicher Rollen mit Beschichtung sehr aufwändig. Dazu sind die alten Beläge mit hohem Zeitaufwand vom Walzenkern mechanisch oder mit einem Lösungsmittel zu entfernen. Anschließend muss die Beschichtung oder der Belag wieder erneuert werden, etwa durch Aufkleben und Beschneiden eines neuen Textilschlauchs oder eines Textitbands.

Der Erfindung liegt daher das Problem zugrunde, die Instandsetzung abgenutzter Rollen und Walzen zu vereinfachen und kostengünstiger zu gestalten.

Zur Lösung dieses Problems ist bei einer Aufsteckhülse der eingangs genannten Art erfindungsgemäß vorgesehen, dass sie auf eine als Aufnahmekern dienende Rolle oder Walze aufsteckbar oder aufgesteckt ist.

Der Erfindung liegt die Erkenntnis zugrunde, dass der Belag oder die Beschichtung als separates Bauteil, getrennt von der Walze oder Rolle, auf der Aufsteckhülse angebracht ist, die bei Bedarf einfach ausgewechselt werden kann. Dadurch entfällt der Austausch einer kompletten Rolle oder Walze, wodurch sich beträchtliche Kosteneinsparungen ergeben. Die erfindungsgemäße Aufsteckhülse kann zum Beispiel bei Serienmaschinen, Sondermaschinen, Transportrollen oder Malerwalzen eingesetzt werden.

Die erfindungsgemäße Aufsteckhülse kann einen streifenförmigen Belag aufweisen, der spiralförmig auf den Hülsenkörper aufgewickelt und mit dessen Oberfläche verbunden ist. Durch die spiralförmige Wicklung werden Kanten in Längsrichtung der Aufsteckhülse vermieden, die generell unerwünscht sind.

Eine besonders gute Haltbarkeit kann erzielt werden, wenn der Belag bei der erfindungsgemäßen Aufsteckhülse auf den aus einem Thermoplast bestehenden Hülsenkörper aufgeschweißt ist. Dazu wird der Hülsenkörper gezielt erwärmt, sodass er sich mit dem Belag verbindet.

In weiterer Ausgestaltung der Erfindung kann die Aufsteckhülse an einer Seite einen Bund oder Bördelung aufweisen, der bzw. die nach innen zur Drehachse hin gerichtet ist. Eine solche Bördelung kann speziell für Farbwalzen vorgesehen sein, damit die Aufsteckhülse einen besseren Halt mit der Rolle oder Walze hat, die als Aufnahmekern dient. Die Aufsteckhülsen mit verschiedenen Durchmessern können wahlweise und im Set als Baukastensystem beliebig ergänzt werden. Vorteilhaft ist dieses System der Aufsteckhülsen vor allem für gebrauchte und benutzte Farbwalzen.

Eine besonders sichere Verbindung lässt sich erzielen, wenn der Innendurchmesser der Aufsteckhülse derart an den Außendurchmesser der als Aufnahmekern dienenden Rolle oder Walze angepasst ist, dass die Aufsteckhülse und der Aufnahmekern fest aneinander gepresst werden. Dadurch werden Relativbewegungen zwischen der Aufsteckhülse und dem Aufnahmekern verhindert.

Bei der erfindungsgemäßen Aufsteckhülse können unterschiedliche Beläge oder Beschichtungen zum Einsatz kommen, die jeweils nach dem vorgesehenen Einsatzzweck ausgewählt werden. Beispielsweise kann es sich dabei um einen Textilbelag, einen Flockbelag, einen Plüschbelag, einen Gummibelag oder eine Gummibeschichtung, einen Polyurethanbelag oder eine entsprechende Polyurethanbeschichtung handeln, ebenso kann eine Teflonbeschichtung vorgesehen sein. Daneben sind auch zweckmäßige Kombinationen möglich, beispielsweise kann auf die Aufsteckhülse zuerst eine Gummibeschichtung und anschließend darauf ein Textilbelag aufgebracht werden.

Eine besonders gute Herstellbarkeit wird erzielt, indem die Aufsteckhülse durch Ablängen eines lang gestreckten, mit dem Belag oder der Beschichtung versehenen, vorzugsweise endlosen Hülsenkörpers herstellbar oder hergestellt ist. Auf diese Weise können Aufsteckhülsen besonders kostengünstig gefertigt werden.

Daneben betrifft die Erfindung ein Schnellwechselsystem für Rollen oder Walzen, das wenigstens eine erfindungsgemäße Aufsteckhülse umfasst, die auf eine Rolle oder Walze aufsteckbar oder aufgesteckt ist.

Durch den Wicklungsprozess und die Erwärmung der Oberfläche des Hülsenkörpers wird dieser etwas deformiert, so dass der Hülsenkörper der Aufsteckhülse und/oder die Rolle oder Walze unrund, vorzugsweise oval, ausgebildet sein kann. Diese Unrundheit ist für bestimmte Einsatzgebiete erwünscht, zum Beispiel für Farb- oder Reinigungswalzen, da der unrunde Hülsenkörper eine Klemmwirkung auf die Walze oder Rolle ausübt. Zusätzlich wird die Verdrehsicherheit erhöht. Bei Farbwalzen kann die Aufsteckhülse an einem Ende gebördelt oder verschlossen werden, so dass bei größerem Durchmesser ein fester Sitz gewährleistet ist.

Die erfindungsgemäße Aufsteckhülse ist lösemittel- und temperaturbeständig, öl-und fettbeständig, nahrungsmittel- und lebensmitteltauglich, waschbar und zu reinigen, sie kann also mehrmals eingesetzt werden.

Bei dem erfindungsgemäßen Verfahren zum instandsetzen einer Rolle oder Walze ist vorgesehen, dass eine Aufsteckhülse, umfassend einen rohrförmigen, mit einem Belag oder einer Beschichtung versehenen Hülsenkörper, auf die Rolle oder Walze aufgeschoben wird. Vorzugsweise kann die Aufsteckhülse vor dem Aufschieben auf die Rolle oder Walze erwärmt oder erhitzt werden, insbesondere im inneren Bereich der Rolle oder Walze. Beim Abkühlen schrumpft die mit dem Belag oder der Beschichtung versehene Aufsteckhülse und presst sich flächig an die Rolle oder Walze an. Wenn die Aufsteckhülse abgenutzt ist, wird sie wieder flächig erwärmt, anschließend lässt sie sich abziehen und kann ersetzt werden.

Weitere Vorteile und Einzelheiten der Erfindung werden anhand eines Ausführungsbeispiels unter Bezugnahme auf die Figuren beschrieben. Die Figuren sind schematische Darstellungen und zeigen:
- Fig. 1: eine Seitenansicht einer erfindungsgemäßen Aufsteckhülse; und
- Fig. 2: eine geschnittene Ansicht einer erfindungsgemäßen Aufsteckhülse, die auf eine Walze aufgesteckt ist.

Die Aufsteckhülse 1 besteht im Wesentlichen aus einem Hülsenkörper 2, der rohrförmig ausgebildet ist und aus einem Thermoplastmaterial besteht. Auf den Hülsenkörper 2 ist ein Textilbelag 3 aufgewickelt und befestigt. Der streifenförmige Textilbelag 3 ist spiralförmig auf den Hülsenkörper 2 aufgewickelt, sodass der Belag in Drehrichtung keine Kanten aufweist. Die Befestigung erfolgt durch Erhitzen des thermoplastischen Hülsenkörpers 2, sodass die Unterseite des Textilbelags 3 mit dem Hülsenkörper 2 verschweißt.

Bei der Herstellung der Aufsteckhülse 1 kommt ein Hülsenkörper 2 in Form eines endlosen Trägerrohrs zum Einsatz, auf den der Textilbelag oder ein anderer Belag oder eine Beschichtung aufgebracht wird, anschließend werden die Aufstedkhülsen in der gewünschten Länge abgelängt.

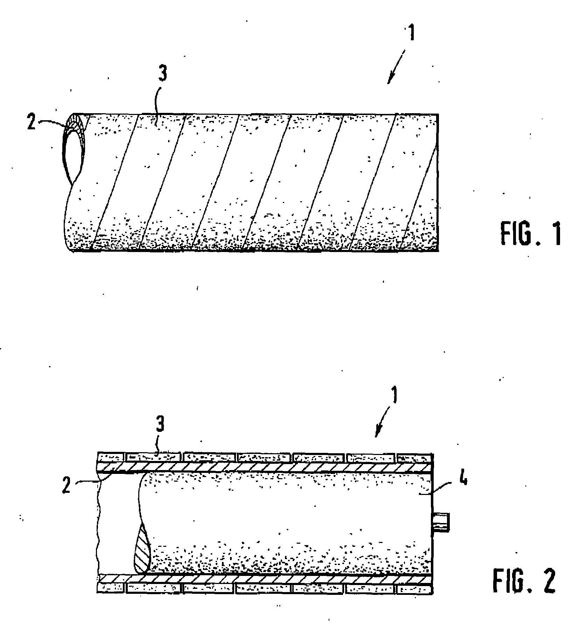

Fig. 2 zeigt die Aufsteckhülse 1 nach dem Aufstecken auf eine Walze 4, die als Aufnahmekern dient. Die in den Fig. 1 und 2 gezeigte Aufsteckhülse kann als Maschinenwalze für unterschiedliche Zwecke eingesetzt werden, zum Beispiel als Umlenkrolle, Andrückrolle, Transportrolle, Kämmwalze, Reinigungswalze oder Farbwalze. Wenn der Belag oder die Beschichtung der Aufsteckhülse 1 abgenutzt oder verschmutzt ist, wird die Aufsteckhülse 1 einfach von der Walze 4 abgenommen und durch eine neue Aufsteckhülse ersetzt. Dadurch entfällt der bisher erforderliche Arbeitsschritt des Entfernens des alten Belags und das Aufkleben des neuen Belags. Der Innendurchmesser des Hülsenkörpers 2 der Aufsteckhülse 1 ist so an den Außendurchmesser der Walze 4 angepasst, dass sich eine stabile Klemmung ergibt, insbesondere ist keine Relativbewegung zwischen der Walze 4 und dem Hülsenkörper 2 möglich.

Als Belag für die Aufsteckhülse können unterschiedliche Textilbeläge, Webplüsche, Flackbeläge oder andere Beläge oder Beschichtungen eingesetzt werden, wobei in Abhängigkeit von dem vorgesehenen Einsatzzweck auch lösemittel- und temperaturbeständige sowie öl- und fettbeständige, nahrungsmittel- oder lebensmitteltaugliche Bezüge oder Beschichtungen zum Einsatz kommen. Zum Teil sind die Beläge und Beschichtungen waschbar und können nach der Reinigung mehrfach eingesetzt werden.

## Patentansprüche

1. Aufsteckhülse (1), umfassend einen rohrförmigen, mit einem Belag (3) oder einer Beschichtung versehenen Hülsenkörper (2), **dadurch gekennzeichnet, dass** sie auf eine als Aufnahmekern dienende Rolle oder Walze aufsteckbar oder aufgesteckt ist.

2. Aufsteckhülse nach Anspruch 1, **dadurch gekennzeichnet, dass** der streifenförmige Belag (3) spiralförmig auf den Hülsenkörper (2) aufgewickelt und mit dessen Oberfläche verbunden ist.

3. Aufsteckhülse nach Anspruch 1 oder 2, **dadurch gekennzeichnet, dass** der Belag (3) auf den aus einem Thermoplast bestehenden Hülsenkörper (2) aufgeschweißt ist.

4. Aufsteckhülse nach einem der vorangehenden Ansprüche, **dadurch gekennzeichnet, dass** sie an einer Seite einen zur Drehachse gerichteten Bund oder eine Bördelung aufweist.

5. Aufsteckhülse nach einem der vorangehenden Ansprüche, **dadurch gekennzeichnet, dass** ihr Innendurchmesser derart an den Außendurchmesser der als Aufnahmekern dienenden Rolle oder Walze (4) angepasst ist, dass die Aufsteckhülse (1) und der Aufnahmekern fest aneinander gepresst werden.

6. Aufsteckhülse nach einem der vorangehenden Ansprüche, **dadurch gekennzeichnet, dass** der Belag oder die Beschichtung als Textilbelag (3), Flockbelag, Plüschbelag, Gummibeschichtung, Polyurethanbeschichtung, Teflonbeschichtung oder als Kombination davon ausgebildet ist.

7. Aufsteckhülse nach einem der vorangehenden Ansprüche, **dadurch gekennzeichnet, dass** sie durch Ablängen eines langgestreckten, mit dem Belag oder der Beschichtung versehenen, vorzugsweise endlosen Hülsenkörper (2) herstellbar oder hergestellt ist.

8. Schnellwechselsystem für Rollen oder Walzen, umfassend wenigstens eine Aufsteckhülse (1) nach einem der Ansprüche 1 bis 7, die auf eine Rolle oder Walze (4) aufsteckbar oder aufgesteckt ist.

9. Schnellwechselsystem nach Anspruch 8, **dadurch gekennzeichnet, dass** der Hülsenkörper (2) der Aufsteckhülse (1) und/oder die Rolle oder Walze (4) unrund, vorzugsweise oval, ausgebildet ist bzw. sind.

10. Verfahren zum Instandsetzen einer Rolle oder Walze, **dadurch gekennzeichnet, dass** eine Aufsteckhülse, umfassend einen rohrförmigen, mit einem Belag oder einer Beschichtung versehenen Hülsenkörper, auf die Rolle oder Walze aufgeschoben wird.

11. Verfahren nach Anspruch 10, **dadurch gekennzeichnet, dass** die Aufsteckhülse vor dem Aufschieben auf die Rolle oder Walze erwärmt wird.
